Europäisches Patentamt

**European Patent Office**

Office européen des brevets

(19)

(11) Numéro de publication : **0 072 311
B1**

(12)

# FASCICULE DE BREVET EUROPÉEN

(45) Date de publication du fascicule du brevet :
28.05.86

(51) Int. Cl.⁴ : **B 62 D 5/08**

(21) Numéro de dépôt : **82401453.4**

(22) Date de dépôt : **03.08.82**

(54) **Distributeur hydraulique pour moteur d'assistance à rappel vers la position de repos.**

(30) Priorité : **04.08.81 ES 505159**

(43) Date de publication de la demande :
**16.02.83 Bulletin 83/07**

(45) Mention de la délivrance du brevet :
**28.05.86 Bulletin 86/22**

(84) Etats contractants désignés :
**DE FR GB IT**

(56) Documents cités :
**EP-A- 0 002 328
FR-A- 2 216 468
FR-A- 2 279 962
GB-A- 2 028 240
GB-A- 2 081 193
GB-A- 2 083 784
GB-A- 2 090 569**

(73) Titulaire : **BENDIBERICA S.A.
Balmès 243
Barcelona 6 (ES)**

(72) Inventeur : **Bacardit, Juan Simon
Calle Mallorca 451
Barcelona 13 (ES)**

(74) Mandataire : **Le Moenner, Gabriel et al
SERVICE BREVETS BENDIX 44, Rue François 1er
F-75008 Paris (FR)**

EP 0 072 311 B1

Jouve, 18, rue St-Denis, 75001 Paris, France

## Description

L'invention concerne les distributeurs hydrauliques, du type comportant un organe primaire, relié à un dispositif d'actionnement, déplaçable par rapport à un organe secondaire fixe ou relié à un dispositif de sortie de force assisté par un moteur hydraulique à double effet, définissant deux circuits parallèles de fluide sous pression entre une source de pression et une sortie de refoulement, de chacun desquels part, entre des premier et second moyens de valves de chaque circuit parallèle entraînés par le mouvement de l'organe primaire, une conduite de travail reliée à une extrémité correspondante du moteur afin de relier alternativement les conduites de travail à la source de pression ou au refoulement. Un tel distributeur est décrit par exemple dans le document GB-A-20 28 240.

Ce genre de distributeur trouve une application typique dans les circuits de direction assistée des véhicules automobiles, où l'organe primaire est actionné par le volant de direction et où le moteur hydraulique de servo-assistance peut être incorporé au boîtier de direction ou former un ensemble indépendant raccordé par un système de liaisons fonctionnelles au mécanisme de direction. Dans un but de simplification, la description suivante se référera à des circuits de direction assistée, quoiqu'il ne s'agisse là que d'un exemple non limitatif.

Dans un circuit de direction assistée de ce genre, le retour du mécanisme en position centrale (roues parallèles à l'axe du véhicule), après un déplacement angulaire déterminé à partir de cette position, dépend de divers facteurs dont l'ensemble est désigné habituellement sous l'appellation « réversibilité spécifique du véhicule ». Le fait que le mécanisme revienne parfaitement en position centrale ou de repos dépend en premier lieu de la géométrie de la direction qui, de son côté, est affectée par divers paramètres tels que, par exemple, la vitesse d'usure acceptée des pneumatiques (convergence) et les caractéristiques dynamiques ou cinématiques du véhicule. Dans les systèmes classiques, il est pratiquement impossible que les roues reviennent exactement en position centrale quand le véhicule est arrêté ou lorsqu'il roule à très faible vitesse.

La présente invention a pour objet de résoudre ce problème, en apportant dans ce but des perfectionnements applicables aux mécanismes de circuits hydrauliques du type indiqué, grâce auxquels, dans des agencements simples compacts et fiables, la servo-direction peut revenir automatiquement en position centrale, indépendamment des caractéristiques du véhicule ou de sa vitesse.

Pour ce faire, conformément à la présente invention, on intercale un moyen de valve de retour dans chaque circuit parallèle de fluide, entre le point de connexion de la conduite de travail et le second moyen de valve (aval ou côté refoulement), les moyens de valves de retour étant actionnés en réponse au déplacement du piston du moteur hydraulique de telle sorte que chacun d'eux produise un étranglement dans le circuit de retour de la chambre du moteur en échappement ou en délestage lors de l'actionnement du moteur, en provoquant ainsi une augmentation de pression dans cette chambre quand le distributeur est ramené en position de repos et que le moteur hydraulique est écarté de cette position de repos.

Lorsque le distributeur revient en position centrale, la pression d'actionnement dans la chambre de commande du moteur produite par la manœuvre préalable du mécanisme de direction est en effet annulée et il se crée donc une pression différentielle entre les deux chambres du moteur, justement dans le sens opposé au mouvement précédent, afin de déplacer le mécanisme pour le ramener effectivement en position centrale.

Selon une caractéristique de l'invention, les moyens de valves de retour sont couplés mécaniquement au piston du moteur hydraulique d'assistance, et comprennent un élément de tiroir commun formé par le piston lui-même ou par une tige fixe s'étendant au travers de ce piston.

D'autres caractéristiques et avantages de l'invention ressortiront de la description suivante des modes de réalisation donnés à titre illustratif et non limitatif, faite en relation avec les dessins annexés, sur lesquels :

la figure 1 est un schéma de fonctionnement représentant un système hydraulique de direction assistée selon l'art antérieur défini précédemment ;

la figure 2 est un schéma équivalent au précédent, illustrant le principe de fonctionnement d'un système de distribution hydraulique selon l'invention ;

la figure 3 représente schématiquement un mode de réalisation d'un tel système où les deux moyens de valves de retour sont matérialisés sous la forme d'un tiroir commun couplé au piston de la direction assistée ;

la figure 4 représente une variante de la figure précédente où les moyens de valves de retour sont incorporés au moteur d'assistance ;

la figure 5 illustre schématiquement l'incorporation des moyens de valves de retour entre les deux organes mutuellement mobiles du distributeur de système de direction ;

la figure 6 montre l'agencement afférent d'un distributeur rotatif du type à rainures ;

les figures 7 et 8 montrent l'agencement du système de la figure 5 dans un boîtier de direction pourvu d'un distributeur rotatif du type en étoile ; et

les figures 9 et 10 montrent un exemple d'incorporation des moyens de valves de retour sur l'arbre de sortie d'un boîtier de direction assistée.

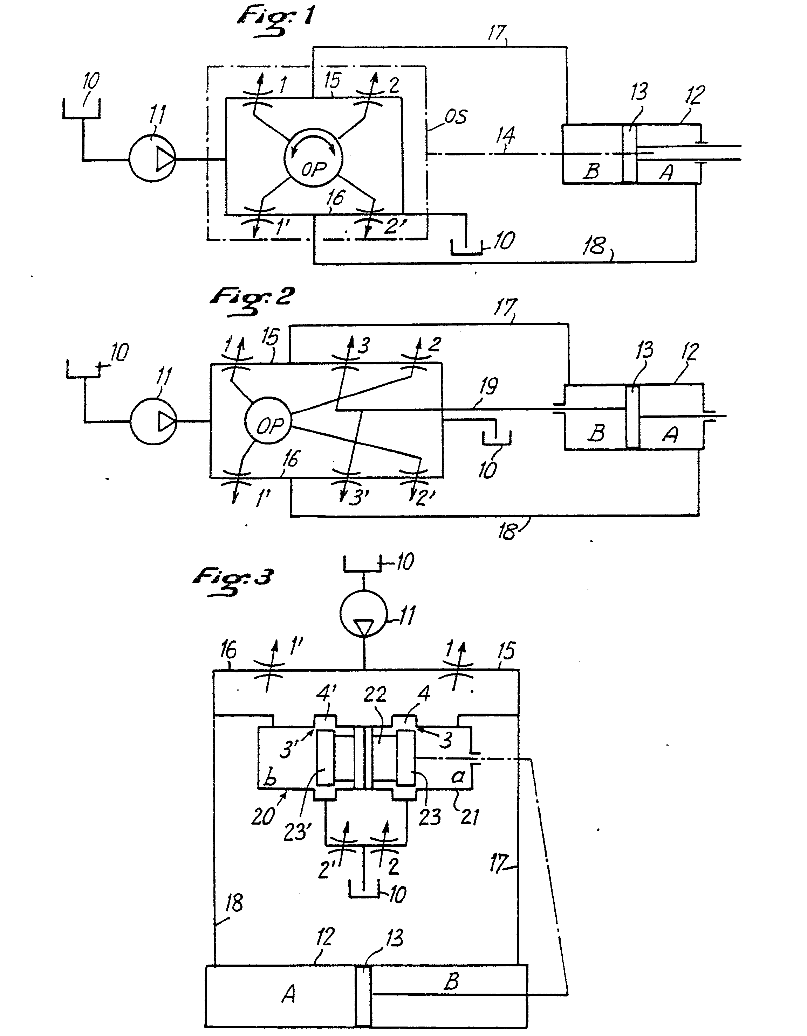

Le principe de fonctionnement d'une direction assistée conventionnelle peut être illustré par le schéma de la figure 1 où 10 indique la bâche ou réservoir de retour de fluide hydraulique, 11 la pompe de compression, 12 le vérin hydraulique d'assistance dont le piston 13 sépare les deux chambres de travail A et B, 1-2 et 1'-2' figurant des premier et second moyens de valves à étranglement variable disposés respectivement dans deux circuits de fluide parallèles 15 et 16 entre la source 11 et la bâche 10 et couplés, d'une part, à un organe primaire OP commandé par le volant de direction et, d'autre part, au piston 13 ou à une autre partie du mécanisme se déplaçant en synchronisme avec celui-ci, par l'intermédiaire d'un organe secondaire OS dont la structure varie suivant les différents types de construction du mécanisme de direction.

Afin de faciliter la description, on supposera que l'ensemble des moyens de valves d'étranglement fait partie d'un distributeur hydraulique rotatif, à rainures ou du type dit en étoile, fonctionnant suivant le principe à centre ouvert, bien qu'il soit cependant évident que l'invention puisse également s'appliquer à d'autres types de distributeurs. On supposera en conséquence qu'une rotation de l'organe primaire OP dans le sens horaire entraîne une fermeture progressive des étranglements 1' et 2 tandis qu'une rotation dans le sens contraire se traduit par une fermeture des étranglements 1 et 2'. Dans le premier cas, il se crée ainsi une augmentation de pression dans le circuit parallèle supérieur 15 (contenant les étranglements 1 et 2), cette surpression parvenant, via une ligne 17 partant de ce circuit supérieur 15 entre les premier et second étranglements 1 et 2, à la chambre B du vérin d'assistance 12 pour déplacer le piston 13 vers la droite de la figure. Dans le second cas, le fonctionnement se fait évidemment en sens inverse, la surpression dans le circuit 16, en amont du second étranglement, étant transmise via la ligne 18, à l'autre chambre du vérin. En raison des relations cinématiques entre les organes primaire et secondaire d'une part et entre l'organe secondaire et le mécanisme de direction, d'autre part, symbolisées par l'axe 14, lorsqu'après une course déterminée du piston 13, le distributeur est revenu en position centrale de repos, les pressions s'équilibrent dans les deux circuits parallèles, et par suite, dans les chambres B et A du vérin d'assistance 12, de sorte que le système d'assistance est rendu totalement inopérant ou désactivé ; il s'en suit donc que le retour du mécanisme de direction en position centrale ne peut alors se faire que sur la base de paramètres mécaniques fonction de l'allure du véhicule, qui deviennent inexistants à faible vitesse ou quand ledit véhicule est à l'arrêt.

Comme sus-mentionné, la présente invention a pour objet de résoudre ces problèmes en proposant des perfectionnements aux distributeurs hydrauliques du type défini ci-dessus, qui permettent de ramener hydrauliquement la direction en position centrale, indépendamment des conditions de marche du véhicule, et donc, notamment, lors de l'exécution de manœuvres de parking.

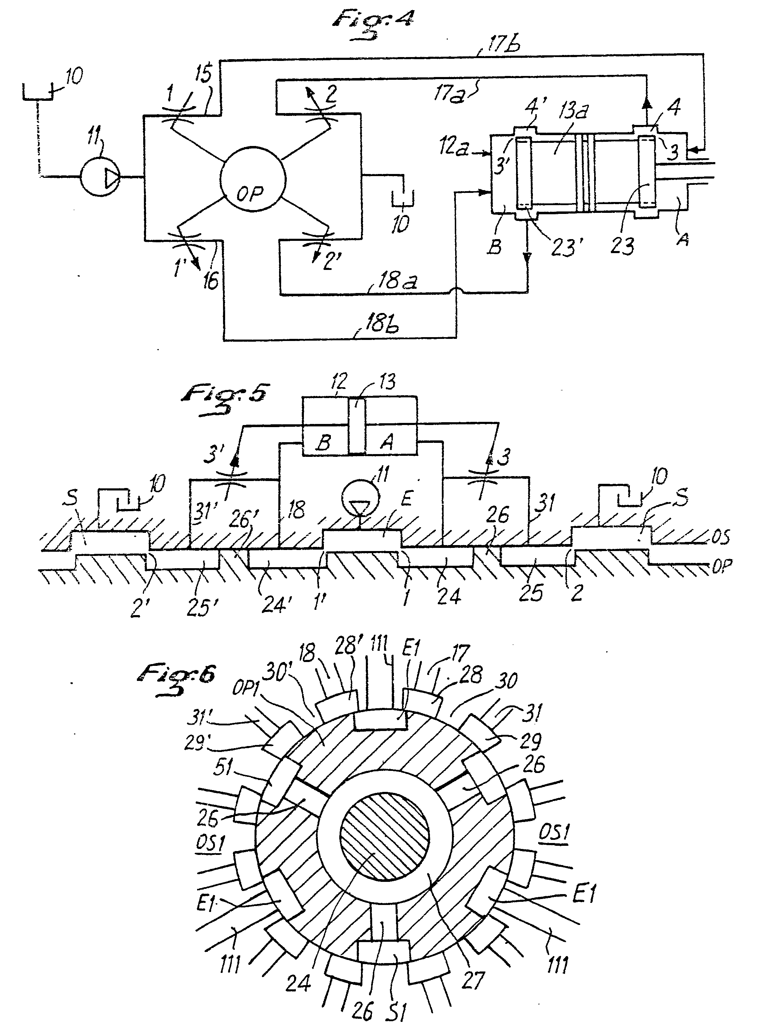

A cet effet, comme on le voit sur la figure 2, on intercale dans les deux circuits parallèles 15 et 16 respectivement, entre les embranchements des lignes 17 et 18 qui aboutissent aux chambres B et A du vérin d'assistance 12 et les seconds étranglements 2 et 2' aval correspondant au côté refoulement, une paire supplémentaire de moyens de valves à étranglement variables 3, 3' actionnés par le mécanisme de direction par l'intermédiaire d'une liaison cinématique symbolisée par l'axe 19, de sorte qu'à tout moment du fonctionnement il existe une tendance à fermer l'étranglement 3 ou 3' correspondant à celui des circuits parallèles 15 ou 16 qui se trouve en phase de refoulement ou de décharge vers la bâche 10. En d'autres termes, si l'on considère le cas susmentionné ou l'organe primaire OP est actionné dans le sens horaire de manière à tendre à fermer les étranglements 1' et 2, tandis que les étranglements 1 et 2' sont maintenus constants ou s'ouvrent, la pression augmente dans le circuit supérieur 15 et crée un flux hydraulique dans la ligne 17 vers la chambre B du vérin alors que le fluide contenu dans l'autre chambre A est parallèlement expulsé par la ligne 18 et la portion aval du circuit 16 pour être déchargé dans la bâche via l'étranglement 2'. Dans ce cas, selon l'invention, la fermeture de l'étranglement supplémentaire 3' dans le circuit délesté 16 provoque dans la chambre A une augmentation de pression qui est inférieure à la pression d'actionnement dans la chambre B mais qui persiste cependant quand, en fin de manœuvre, la pression dans les conduites de liaison de la chambre B du vérin tombe, c'est-à-dire lorsque l'on ramène le distributeur en position centrale. En conséquence, la direction est alors automatiquement actionnée en sens contraire jusqu'à ce que les étranglements 3 et 3' reviennent en position de repos par suite du retour effectif du mécanisme de direction en position centrale.

Lorsque l'organe primaire est actionné dans le sens inverse des aiguilles d'une montre, le même processus se répète symétriquement, en mettant en œuvre, cette fois, l'étranglement 3 du circuit 15.

Il est entendu que les étranglements 1, 2 et 1', 2' conservent par ailleurs le même couplage cinématique 14 que dans le mode de réalisation décrit en relation avec la figure 1.

Le principe d'actionnement selon l'invention peut être mis en pratique de différentes manières selon la nature du mécanisme de direction auquel il est appliqué.

La figure 3 montre ainsi le diagramme schématique de la figure 2 modifié de manière que les deux étranglements supplémentaires 3, 3' soient incorporés dans un moyen de valve à tiroir indépendant, désigné d'une manière générale par le repère 20 et où les éléments communs avec ceux de la figure 2 sont repérés par les mêmes références.

Le moyen de valve 20 comprend un cylindre 21 fermé à ses deux extrémités et muni intérieurement de deux lumières annulaires 4 et 4' distantes axialement l'une de l'autre. A l'intérieur du cylindre coulisse axialement de façon étanche un piston 22 qui définit dans le cylindre deux chambres opposées a, b et qui comporte deux plateaux cylindriques d'extrémité 23 et 23' qui, lorsque le piston est en position centrale ou de repos, sont en face des lumières annulaires 4 et 4' de manière à définir périphériquement avec les bords des lumières les étranglements supplémentaires 3 et 3' décrits plus haut, ainsi qu'on peut le voir sur la figure 3.

On peut voir parfaitement sur cette figure 3 tant la disposition des circuits de la figure 2 que le fonctionnement décrit en s'y référant, les circuits parallèles 15 et 16 incorporant les chambres a et b, à partir desquelles partent les lignes de distribution 17 et 18, les étranglements 2 et 2' étant situés immédiatement en aval des lumières 23 et 23', respectivement.

La figure 4 montre la possibilité d'intégrer le moyen de valve à tiroir 20 de la figure 3 dans le vérin d'assistance dont le cylindre 12a et le piston 13a sont conformés pour jouer le rôle des organes correspondants 12 et 13 décrits ci-dessus en étant dotés des mêmes éléments que le moyen de valve à tiroir 20 de la figure 3 (avec les mêmes références), de manière à former les étranglements supplémentaires 3 et 3'. Dans ce cas, les lumières annulaires 4 et 4' de l'ensemble cylindre d'assistance/valve à tiroir 12a (12-20) sont respectivement reliées par des lignes 17a et 18a aux entrées des étranglements aval 2 et 2' du distributeur hydraulique tandis que les chambres A et B du vérin sont reliées aux sorties des étranglements amont 1 et 1' du distributeur par des lignes 17b et 18b. On conserve évidemment les mêmes circuits fonctionnels que ceux de la figure 2, les séquences de fonctionnement étant exactement les mêmes que celles décrits en relation avec les figures 2 et 3.

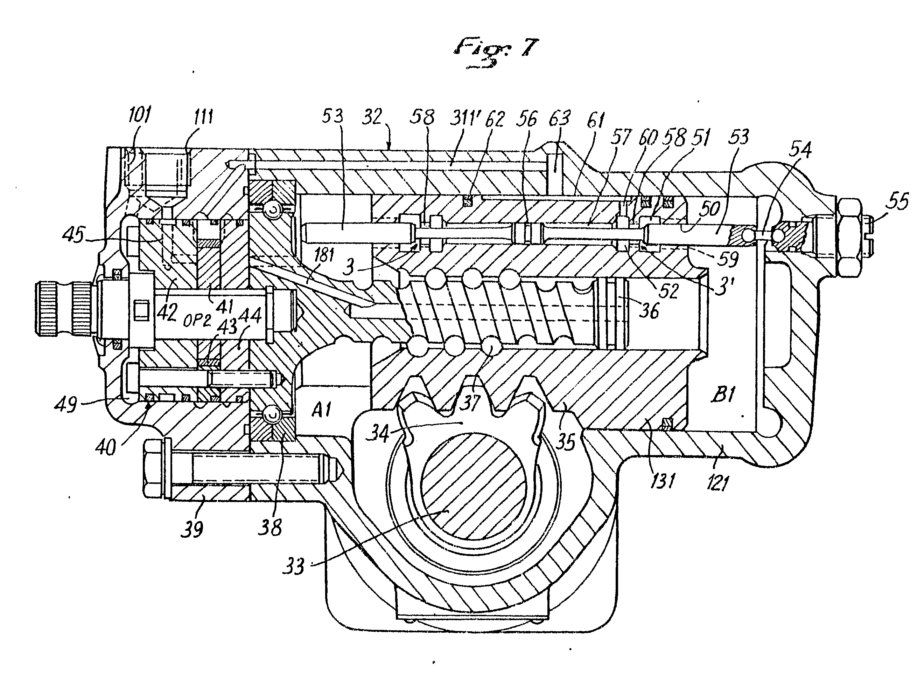

La figure 5 montre de façon schématique un mode de réalisation où les étranglements de retour supplémentaires 3 et 3' sont incorporés dans le distributeur de commande de direction assistée lui-même. La figure 5 peut être considérée comme le schéma d'un distributeur linéaire à tiroir ou le schéma développé d'un distributeur rotatif, tant à rainures longitudinales qu'à rotor en étoile. On retrouve ici aussi un organe primaire OP qui reçoit le mouvement du volant de direction et un organe secondaire OS qui est relié au mécanisme de direction ou fait partie de celui-ci. L'organe secondaire OS comporte des lumières d'entrée E reliées à la source de pression 11 et, symétriquement de part et d'autre de chaque lumière d'entrée E, des lumières de sortie S reliées à la bâche 10. L'organe primaire OP est muni de cavités de passage 24 et 24' de chaque côté de chaque lumière d'entrée E (en position centrale du distributeur) et de cavités de passage 25, 25' de chaque côté de chaque lumière de refoulement S. Les cavités et les lumières des deux organes OP et OS coopèrent mutuellement suivant le principe connu d'un distributeur à centre ouvert et définissent entre elles les étranglements 1, 2 et 1', 2' correspondant aux étranglements portant les mêmes références, décrits dans les précédents modes de réalisation. Les cavités 24 et 25, d'une part, 24' et 25' d'autre part sont mutuellement séparées par des cloisons intermédiaires 26 et 26', respectivement, de l'organe primaire OP, qui coopèrent en ajustement coulissant étanche avec des surfaces en vis-à-vis correspondantes de l'organe secondaire OS. Les lignes de distribution 17 et 18 reliées aux chambres correspondantes A, B du vérin d'assistance 12 partent des cavités 24, 24' et les étranglements supplémentaires 3 et 3', que l'on peut réaliser suivant l'une quelconque des manières décrites plus haut, sont intercalés dans des lignes reliant les cavités adjacentes 24 et 25 d'une part et 24' et 25' d'autre part, respectivement.

On appréciera le fait que l'on retrouve également, dans ce cas, les deux circuits parallèles qui vont de la source de pression 11 à la bâche 10 via la lumière d'entrée E, l'étranglement amont 1, la cavité 24, l'étranglement supplémentaire 3, la chambre 25, l'étranglement aval 2 et la lumière S pour le circuit 15, et via les mêmes éléments du circuit portant les références primes pour l'autre circuit 16.

Le fonctionnement du système est évidemment le même que précédemment si l'on suppose que le sens de rotation dans le sens des aiguilles d'une montre des cas précédents est remplacé par un déplacement vers la droite, sur la figure 5, de l'organe primaire OP par rapport à l'organe secondaire OS, et réciproquement.

Certaines formes de réalisation pratique des systèmes décrits schématiquement ci-dessus vont maintenant être détaillés.

Il a été indiqué que le schéma de la figure 5 peut correspondre au développement d'un distributeur rotatif du type à rainures longitudinales, par exemple tel que représenté sur la figure 6 et comprenant un rotor cylindrique ou organe primaire OP1 monté en rotation dans une cavité cylindrique complémentaire formée par un stator ou organe secondaire OS1. L'organe primaire récepteur de mouvement est couplé à l'organe secondaire pour que celui-ci puisse transmettre sélectivement le mouvement au mécanisme de direction, par l'intermédiaire d'un accouplement à course morte (non représenté), qui autorise ainsi un déplacement relatif des deux organes pour réaliser la fonction du distributeur hydraulique, et par une barre de torsion centrale, dont la section est visible en 24, qui sert à maintenir lesdits organes en position de repos mutuellement centrée, comme cela est connu dans la technique.

Dans le mode de réalisation de la figure 6, qui est une vue en coupe transversale du distributeur, le stator OS1 comporte trois canaux radiaux 111 reliés à l'entrée de fluide sous pression du boîtier du distributeur. Ces canaux, en position de repos ou centrée du distributeur, sont disposés en face de rainures longitudinales correspondantes E1 formées angulairement réparties sur la surface latérale périphérique du rotor OP1. Entre ces rainures d'entrée E1, d'autres rainures S1, uniformément distribuées angulairement, communiquent par des conduits radiaux 26 avec la cavité centrale 27 du rotor du distributeur, qui se prolonge vers l'une des extrémités du boîtier de direction (selon la construction de ce dernier) pour être raccordée au circuit extérieur de décharge ou de retour vers la bâche. Les deux jeux de rainures E1 et S1 correspondent évidemment aux lumières E et S de la figure 5.

Sur un côté de chaque rainure d'entrée E1, la surface intérieure du stator OS1 comporte deux rainures longitudinales adjacentes 28 et 29 séparées par une cloison intermédiaire 30 qui s'ajuste hermétiquement avec la surface du rotor OP1 et d'où partent respectivement (Figure 5) une ligne de distribution 17, aboutissant au côté amont de l'étranglement de retour supplémentaire 3 et à une chambre A du cylindre d'assistance 12, et une ligne de retour 31 reliée à l'extrémité opposée (aval) dudit étranglement de retour 3. Les flancs des rainures de distribution 28 et de retour 29, opposés à la cloison intermédiaire 30, coopèrent en relation de valve à centre ouvert avec deux rainures adjacentes E1 et S1 du rotor OP1. De l'autre côté de chaque rainure d'entrée E1 se trouve un jeu symétrique de rainures de stator désignées par les mêmes références « primes ».

On constatera que les rainures du rotor E1 et S1 et du stator 28 et 29 et leurs symétriques, correspondent respectivement aux lumières E et S d'une part et aux cavités 24, 25 d'autre part de la figure 5, de telle sorte que le fonctionnement du dispositif de la figure 6 est exactement le même que celui du schéma de la figure 5 à la différence près qu'un déplacement vers la gauche de l'organe primaire OP de la figure 5 correspond à une rotation dans le sens des aiguilles d'une montre du rotor OP1 de la figure 6.

Les figures 7 et 8 représentent un autre mode de réalisation de l'invention où le système de retour du fluide hydraulique est appliqué à un boîtier de direction assistée muni d'un distributeur en étoile à réaction hydraulique du type décrit de façon détaillée, notamment dans le brevet britannique 1 576 153 au nom de la demanderesse dont le contenu est supposé intégré ici, ce qui fait que l'on n'en décrira ici que les organes principaux et ceux propres à l'invention.

Le boîtier de servo-direction, désigné par la référence générale 32, comporte un arbre de sortie 33 vers le mécanisme de direction, muni d'un secteur denté 34 qui s'engrène sur la crémaillère intégrée au piston-écrou 131 coulissant dans le cylindre 121 formant les deux chambres de travail A1 et B1. Le piston-écrou 121 est actionné par une vis 36, par l'intermédiaire d'un chemin de circulation de billes 37. La vis 36 tourne dans un roulement à billes 38 fixé dans l'ouverture du boîtier par un couvercle 39 à l'intérieur duquel est agencé le distributeur 40

hydraulique en étoile, l'ensemble étant traversé l'arbre d'actionnement OP2 de l'organe primaire, auquel on peut raccorder de la manière habituelle la transmission provenant du volant de direction du véhicule. A l'intérieur du distributeur 40, l'organe primaire est constitué par un rotor en étoile 41 monté de façon à pouvoir tourner dans une cavité discoïde définie par un ensemble formé par l'emplement de trois plateaux annulaires coaxiaux 42, 43 et 44, lui-même monté tournant dans un alésage du couvercle 39.

Les plateaux d'extrémité 42 et 44 définissent dans l'exemple représenté, trois lumières d'entrée E2 qui communiquent par des conduits 45 avec l'entrée de fluide hydraulique 111 du boîtier et, des deux côtés de chaque lumière d'entrée, le rotor comporte des cavités de distribution 241 et 241' d'où partent des conduits 171 et 181 qui aboutissent respectivement aux chambres A1 et B1. Le rotor en étoile 41 est muni ici de trois bras radiaux 46 et la plaque intermédiaire 43 comporte trois saillies radiales intérieures 47 qui s'ajustent hermétiquement au corps du rotor par des joints 48 de manière à définir, dans la cavité discoïde, entre ces bras et ces saillies, des chambres de retour 251 et 251' où débouchent, par l'intermédiaire des étranglements comme on le verra par la suite, des conduites de retour 311 et 311' dont seule la seconde est visible sur la figure 7. Les plateaux d'extrémité 42 et 44 comportent en outre des lumières S2 qui communiquent par des conduits (non représentés) avec une chambre avant 49 du couvercle et la sortie de fluide de retour, respectivement.

Le piston 131 est traversé, parallèlement à son axe, par un perçage 50 qui comporte, au voisinage de chacune de ses extrémités, une chambre annulaire extérieure 51 et une chambre annulaire intérieure 52. A l'intérieur de ce perçage coulisse une tige 53 dont les extrémités font saillie dans les chambres A1 et B1 du cylindre de vérin 121. L'extrémité de la tige dans la chambre B1 est fixée au fond du cylindre par une articulation à rotule 54 et une vis de réglage 55 permettant de régler la position axiale de la tige. Cette dernière forme étanchéité dans le perçage 50 grâce à un joint annulaire central 56, de part et d'autre duquel elle présente des sections de diamètre réduit 57 dont les flancs extérieurs sont situés, dans la position centrale de repos du piston représentée sur la figure 7, dans les chambres annulaires extérieures 51, en face des orifices 58 qui font communiquer ces dernières avec les chambres intérieures correspondantes 52, de manière à constituer les étranglements 3 et 3'. Les orifices 58 ont à cet effet un diamètre égal ou légèrement supérieur à celui des extrémités de la tige. Les flancs extérieurs des sections à diamètre réduit sont chanfreinés de manière appropriée et chaque orifice 58 peut être doté de rainures ou stries afin de réaliser l'allure désirée de variation de la section de passages entre les deux éléments coaxiaux et empêcher notamment qu'il ne se produise une fermeture totale des étranglements. De chaque côté du piston, la chambre annulaire extérieure 51 communique avec la chambre de travail adjacente A, B du cylindre par l'intermédiaire de rainures longitudinales 59 dans le perçage. Chaque chambre annulaire intérieure 52 communique par un trou radial 60 avec une rainure longitudinale 61 formée dans la surface périphérique du piston 131 et entourée par les joints annulaires 62 de manière à être isolée de l'intérieur du cylindre, lequel comporte dans l'épaisseur de sa paroi une cavité 63 dans laquelle débouche le conduit 311 ou 311'. Sur la figure 7, on ne voit que les trajets du circuit comprenant le conduit 311', mais il est entendu qu'un montage similaire situé dans un plan en coupe différent de celui de la figure réalise le circuit correspondant au conduit 311 de la figure 8.

Le fonctionnement de ce système de retour est très simple. Lorsque le piston 131 est déplacé vers la droite parce que le distributeur envoie du fluide sous pression vers la chambre A1, la chambre B1 se vide par les rainures 59, la chambre extérieure droite 51 l'étranglement variable 3', la chambre intérieure adjacente 52, le trou 60, la rainure 61 et le conduit 311' vers le circuit de sortie du distributeur. Ainsi, l'orifice de passage 58 du côté droit de la figure se déplace dans le même sens par rapport à la tige 53 et l'étranglement 3' se ferme progressivement, ce qui crée dans la chambre B1 une augmentation de pression qui, lorsque le distributeur revient en position de repos, permet de repousser en retour le piston 13 vers la gauche jusqu'à sa position centrale de repos, comme décrit de façon détaillée précédemment. Il se produit évidemment un fonctionnement symétrique quand le piston 131 est déplacé vers la gauche de la figure sous l'action du distributeur 40.

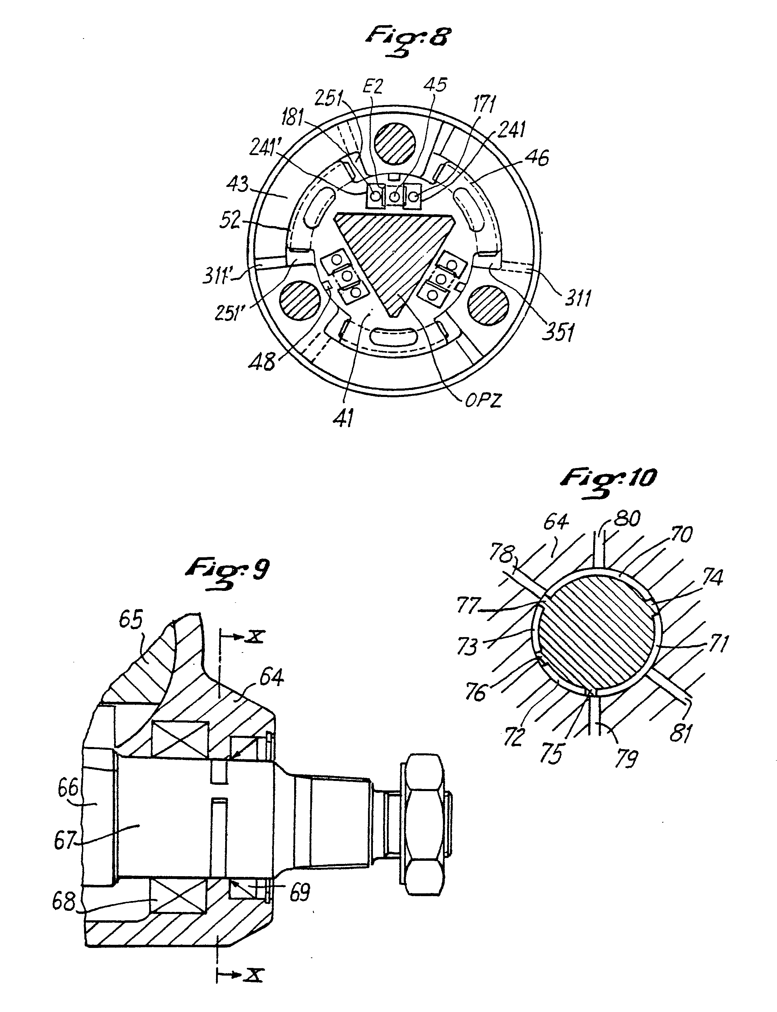

Une autre forme de réalisation pratique conforme à l'invention est représentée sur les figures 9 et 10. Le repère 64 désigne le boîtier de direction, où l'on peut voir une partie du piston 65, du secteur denté 66 et de l'arbre de sortie 67 qui fait saillie à l'extérieur du boîtier après avoir traversé un roulement 68 et une bague de retenue 69. Dans la partie de l'arbre de sortie comprise entre ces deux derniers organes sont formées plusieurs rainures 70, 71, 72 et 73 périphériques angulairement réparties dans un même plan de coupe et séparées par des cloisons radiales 74, 75, 76 et 77. Des conduits radiaux 78 et 79 communiquant normalement avec les rainures 70 et 73, respectivement, via des étranglements formés par les cloisons 77 et 75, sont réalisés dans la zone du boîtier située en face de ces rainures et sont reliés au distributeur, tandis que des conduits radiaux 80 et 81, communiquant normalement avec les rainures 70 et 71, sont reliés aux chambres du cylindre d'assistance formé dans le boîtier 64.

Le fonctionnement est dans ce cas similaire à celui décrit dans les modes de réalisation précédents.

**Revendications**

1. Distributeur hydraulique du type comportant un organe primaire (OP ; OP1 ; 41) relié à un dispositif de commande d'entrée (OP2) et déplaçable par rapport à un organe secondaire (OS ; OS1 ; 42, 43, 44) fixe ou relié à un dispositif de sortie (36) assisté par un moteur hydraulique à double effet (12 ; 12a ; 121), définissant deux circuits de fluide parallèles sous pression (15 ; 16) entre une source de pression (11) et une bâche (10), une conduite de travail (17, 18) conduisant à une chambre correspondante (A, B) du moteur hydraulique étant connectée à une portion intermédiaire de chaque circuit parallèle, respectivement, entre des premier et second moyens de valves (1, 2 ; 1', 2') disposés en série dans chaque circuit parallèle et actionnés par le mouvement de l'organe primaire afin de relier alternativement les conduites de travail à la source ou au refoulement, caractérisé en ce qu'il comprend un moyen de valve de retour (3 ; 3') dans chaque circuit parallèle (15 ; 16), entre le point de connexion de la conduite de travail (17, 18) et le second moyen de valve aval (2, 2'), actionné en réponse au déplacement du piston (13 ; 131) du moteur hydraulique (12, 12a, 121) de façon à créer un étranglement dans le circuit de retour de la chambre en échappement du moteur lors de l'actionnement du moteur afin de produire une augmentation de pression dans cette chambre quand le distributeur se trouve en position de repos et le moteur est dans une configuration écartée de celle-ci.

2. Distributeur selon la revendication 1, caractérisé en ce que chaque moyen de valve de retour (3 ; 3') est couplé mécaniquement au piston (13 ; 131) du moteur hydraulique (12 ; 12a ; 121).

3. Distributeur selon la revendication 2, caractérisé en ce que les moyens de valve de retour (3, 3') comprennent un élément de tiroir commun (22 ; 13a ; 53).

4. Distributeur selon la revendication 3, caractérisé en ce que chaque moyen de valve de retour (3, 3') comprend une lumière annulaire (4 ; 4' ; 51) coopérant avec ledit élément de tiroir (22 ; 13a ; 53).

5. Distributeur selon la revendication 3 ou la revendication 4, caractérisé en ce que l'élément de tiroir est constitué par le piston (13a) du moteur (12a).

6. Distributeur selon la revendication 4, caractérisé en ce que les lumières annulaires (51) sont formées dans le piston (131) du moteur (121, 131).

7. Distributeur selon la revendication 4 et la revendication 5, caractérisé en ce que les lumières annulaires (4, 4') sont formées dans la chemise du moteur (12a) et sont reliées respectivement aux circuits parallèles (15, 16) en amont des seconds moyens de valve (2, 2').

8. Distributeur selon la revendication 6, caractérisé en ce qu'il comprend un élément de tiroir fixe (53) s'étendant dans un évidement longitudinal (57) du piston (131) du moteur.

9. Distributeur selon la revendication 8, caractérisé en ce que le moteur (121, 131) est du type à piston-écrou (131) intégré dans un boîtier de servo-direction (32).

10. Distributeur selon l'une des revendications précédentes, du type dans lequel les organes primaire et secondaire sont déplaçables en rotation l'un par rapport à l'autre et définissent mutuellement les premiers (1 ; 1') et seconds (2 ; 2') moyens de valves dans un agencement du type à centre ouvert, caractérisé en ce que l'un des organes (OS1 ; 42, 43, 44) définit, entre une lumière d'entrée (E1, E2) et une lumière de sortie (S1, S2), une cavité de distribution (28, 28' ; 241, 241') et une cavité de retour (29, 29' ; 251, 251') séparées et interconnectées par le moyen de valve de retour (3, 3') correspondant.

## Claims

1. A hydraulic distributor of the type comprising a primary member (OP ; OP1 ; 41) connected to an inlet control device (OP2) and displaceable with respect to a secondary member (OS ; OS1 ; 42, 43, 44) fixed or connected to an outlet device (36) assisted by a double-acting hydraulic motor (12 ; 12a ; 121), defining a pair of parallel pressure fluid circuits (15 ; 16) between a pressure source (11) and a reservoir (10), a work conduit (17, 18) leading to a corresponding chamber (A, B) of the hydraulic motor being connected to an intermediary portion of each parallel circuit, respectively, between first and second valve means (1, 2 ; 1', 2') arranged in series in each parallel circuit and actuated by the movement of the primary member to connect alternatively the work conduits to the source or the refeeding, characterized in that it comprises a return valve means (3 ; 3') in each parallel circuit (15 ; 16) between the point of connection of the work conduit (17, 18) and the second valve means (2, 2'), which return valve means is actuated in respect to a displacement of the piston (13 ; 131) of the hydraulic motor (12, 12a, 121) such as to create a restriction in the return circuit of the discharging chamber of the motor upon actuation of the motor in order to generate a pressure increase in said chamber when the distributor is in the rest position and the motor is in a condition spaced therefrom.

2. Distributor according to claim 1, characterized in that each return valve means (3 ; 3') is mechanically coupled to the piston (13 ; 131) of the hydraulic motor (12 ; 12a ; 121).

3. Distributor according to claim 2, characterized in that the return valve means (3, 3') comprise a common spool element (22 ; 13a, 53).

4. Distributor according to claim 3, characterized in that each return valve means (3, 3') comprises an annular slot (4 ; 4' ; 51) cooperating with said spool element (22 ; 13a ; 53).

5. Distributor according to claim 3 or 4, characterized in that the spool element is constituted by the piston (13a) of the motor (12a).

6. Distributor according to claim 4, characterized in that the annular slots (51) are formed in the piston (131) of the motor (121, 131).

7. Distributor according to claim 4 or claim 5, characterized in that the annular slots (4 ; 4') are formed in the casing of the motor (12a) and are connected, respectively, to the parallel circuits (15, 16) upstream of the second valve means (2, 2').

8. Distributor according to claim 6, characterized in that it comprises a fixed spool element (53) extending into a longitudinal recess (57) of the piston (131) of the motor.

9. Distributor according to claim 8, characterized in that the motor (121, 131) is of the piston-nut-type (131) integrated in a housing of the servo steering mechanism (32).

10. Distributor according to any of the preceding claims, of the type wherein the primary and secondary members are angularly displaceable with respect to each other and mutually define the first (1 ; 1') and second (2 ; 2') valve means in a system of the open-center-type, characterized in that the one of the members (OS1 ; 42, 43, 44) defines, between a first inlet opening (E1, E2) and an outlet opening (S1, S2), a distribution cavity (28 ; 28' ; 241, 241') and a return cavity (29 ; 29' ; 251, 251') separated and interconnected by the corresponding return valve means (3, 3').

## Patentansprüche

1. Hydraulischer Verteiler mit einem ersten Bauteil (OP ; OP1 ; 41), das mit einer Einlaßsteuervorrichtung (OP2) verbunden und bezüglich eines zweiten Bauteils (OS ; OS1 ; 42, 43, 44) verschiebbar ist, das festgelegt oder mit einer Auslaßvorrichtung (36) verbunden ist, die von einem doppeltwirkenden hydraulischen Motor (12 ; 12a ; 121) unterstützt wird, mit zwei parallelen Druckmittelkreisen (15 ; 16) zwischen einer Druckquelle (11) und einem Reservoir (10), wobei eine Arbeitsleitung (17, 18), die zu einer entsprechenden Kammer (A, B) des hydraulischen Motors führt, mit einem Zwischenabschnitt jedes parallelen Kreises zwischen ersten und zweiten Ventilmitteln (1, 2 ; 1', 2') verbunden ist, die in Reihe geschaltet in jedem parallelen Kreis angeordnet sind und durch die Bewegung des ersten Bauteils betätigt werden, um abwechselnd die Arbeitsleitungen mit der Quelle oder der Rückführung zu verbinden, gekennzeichnet durch ein Rückschlagventilmittel (3 ; 3') in jedem parallelen Kreis (15 ; 16) zwischen dem Anschlußpunkt der Arbeitsleitung (17, 18) und dem zweiten stromabwärtigen Ventilmittel (2, 2'), das in Abhängigkeit von einer Verschiebung des Kolbens (13 ; 131) des hydraulischen Motors (12, 12a, 121) so betätigt wird, daß in dem Rückführkreis der Auslaßkammer des Motors bei Betätigung des Motors eine Drosselung erzeugt wird, um den Druck in dieser Kammer zu erhöhen, wenn der Verteiler sich in der Ruhestellung und der Motor in einem davon entfernten Zustand befindet.

2. Verteiler nach Anspruch 1, dadurch gekennzeichnet, daß jedes Rückschlagventilmittel (3 ; 3') mechanisch mit dem Kolben (13 ; 131) des hydraulischen Motors (12 ; 12a ; 121) gekoppelt ist.

3. Verteiler nach Anspruch 2, dadurch gekennzeichnet, daß die Rückschlagventilmittel (3, 3')
ein gemeinsames Schieberelement (22 ; 13a ; 53)
aufweisen.

4. Verteiler nach Anspruch 3, dadurch gekennzeichnet, daß jedes Rückschlagventilmittel (3, 3')
einen Ringschlitz (4 ; 4' ; 51) aufweist, das mit
dem Schieberelement (22 ; 13a ; 53) zusammenwirkt.

5. Verteiler nach Anspruch 3 oder 4, dadurch
gekennzeichnet, daß das Schieberelement von
dem Kolben (13a) des Motors (12a) gebildet wird.

6. Verteiler nach Anspruch 4, dadurch gekennzeichnet, daß die Ringschlitze (51) in dem Kolben
(131) des Motors (121, 131) gebildet sind.

7. Verteiler nach den Ansprüche 4 und 5, dadurch gekennzeichnet, daß die Ringschlitze (4,
4') in dem Mantel des Motors (12a) gebildet sind
und an den parallelen Kreisen (15, 16) stromauf
der zweiten Ventilmittel (2, 2') angeschlossen
sind.

8. Verteiler nach Anspruch 6, dadurch gekennzeichnet, daß er ein festgelegtes Schieberelement
(53) aufweist, das sich in eine Längsausnehmung
(57) des Kolbens (131) des Motors erstreckt.

9. Verteiler nach Anspruch 8, dadurch gekennzeichnet, daß der Motor (121, 131) als
Schraubkolbenmotor (131) ausgebildet ist, der in
ein Gehäuse der Servolenkung (32) integriert ist.

10. Verteiler nach einem der vorhergehenden
Ansprüche, bei dem das erste und zweite Bauteil
relativ zueinander drehbar sind und gegenseitig
die ersten (1 ; 1') und zweiten (2 ; 2') Ventilmittel
in einem Kreis mit offener Mitte bilden, dadurch
gekennzeichnet, daß das eine der Bauteile (OS1 ;
42, 43, 44) zwischen einer Einlaßöffnung (E1, E2)
und einer Auslaßöffnung (S1, S2) eine Verteilerkammer (28, 28' ; 241, 241') und eine Rückführkammer (29, 29' ; 251, 251') bildet, die durch
das entsprechende Rückschlagventilmittel (3, 3')
getrennt und verbunden werden.

*Fig. 1*

*Fig. 2*

*Fig. 3*

**0072311**

*Fig.4*

*Fig.5*

*Fig.6*

2

Fig. 7

0072311

Fig. 8

Fig. 9

Fig. 10